Europäisches Patentamt

European Patent Office

Office européen des brevets

(19)

(11) Veröffentlichungsnummer: **0 175 856**
**B1**

(12)

# EUROPÄISCHE PATENTSCHRIFT

(45) Veröffentlichungstag der Patentschrift:
10.05.89

(21) Anmeldenummer: 85108205.7

(22) Anmeldetag: 03.07.85

(51) Int. Cl.⁴: **F 16 L 21/06**

(54) Spannmuffe mit einer Spannschraube.

(30) Priorität: 27.09.84 DE 3435368

(43) Veröffentlichungstag der Anmeldung:
02.04.86 Patentblatt 86/14

(45) Bekanntmachung des Hinweises auf die Patenterteilung:
10.05.89 Patentblatt 89/19

(84) Benannte Vertragsstaaten:
AT BE CH DE FR GB IT LI NL SE

(56) Entgegenhaltungen:
AT-B-136 899
CH-A-250 454
DE-A-1 923 950
DE-U-7 406 823
FR-A-1 260 979
US-A-3 801 141

(73) Patentinhaber: MAGE AG, Industriestrasse, CH-1781 Courtaman (CH)

(72) Erfinder: Gehring, Manfred, Plankstrasse 10, D-7290 Freudenstadt 1 (DE)
Erfinder: Plüss, Heinz, Champ des Fontaines, CH-1781 Courtaman (CH)

(74) Vertreter: Patentanwälte Kohler - Schwindling - Späth, Hohentwielstrasse 41, D-7000 Stuttgart 1 (DE)

EP 0 175 856 B1

## Beschreibung

Die Erfindung betrifft eine Spannmuffe für Rohre, bestehend aus einem gummielastischen Dichtungsring, der an jedem seiner Enden mindestens eine radial nach innen vorspringende Wulst aufweist, und einem den Dichtungsring umgebenden Spannring in Form eines kreisförmig gebogenen Blechstreifens, an dessen Enden radial nach außen gerichtete, einander gegenüberstehende Spannplatten angebracht sind, die von einer zentral angeordneten Spannschraube durchsetzt werden, die sich ihrerseits an den Spannplatten über Zwischenstücke abstützt.

Eine solche Spannmuffe ist aus der DE-A-1 923 950 bekannt. Bei dieser Spannmuffe werden die Spannplatten von abgewinkelten Enden des Blechstreifens gebildet, an deren Außenseiten Zwischenstücke in Form von plattenförmigen Backen anliegen, die in ihrer Mitte eine Durchgangsbohrung bzw. eine Gewindebohrung für die Spannschraube aufweisen. Zu beiden Seiten der zentralen Spannschraube sind Führungsstifte angeordnet, welche die Backen mit den Spannplatten parallel zueinander halten und dadurch ein Verkanten der Backen und Spannplatten beim Anziehen der Spannschraube verhindern sollen, damit durch ein solches Verkanten bedingte, auf die Schraube wirkende Reibungskräfte möglichst klein bleiben. Allerdings sollen die Durchgangslöcher für die Führungsstifte einen in Achsrichtung der Spannmuffe länglichen Querschnitt haben, um ein Verkanten der Backen und Spannplatten gegeneinander in Achsrichtung zuzulassen, das immer dann eintritt, wenn die mittels der Spannmuffe zu verbindenden Rohre voneinander verschiedene Durchmesser haben. Eine strenge Parallelführung der Backen und Spannplatten wurde dann eine einwandfreie Abdichtung des im Durchmesser kleineren Rohres verhindert. Durch die Anordnung von Langlöchern für die Führungsstifte wird jedoch deren Wirkung in entscheidendem Maße wieder aufgehoben, so daß es in dem sehr häufig vorkommenden Fall, daß die miteinander zu verbindenden Rohre unterschiedliche Durchmesser haben, doch wieder zu einem starken Verklemmen der Spannschraube kommt, wodurch einerseits die Spannschraube übermäßig belastet wird und andererseits die Herstellung einer einwandfreien Verbindung gefährdet ist.

Die vorstehend genannten Schwierigkeiten treten bei solchen Spannmuffen in vermindertem Maße auf, bei denen die Spannplatten und ggf. an den Spannplatten anliegende Zwischenstücke von zwei nahe den Rändern der Spannmuffe angeordneten Spannschrauben durchsetzt werden, die wechselseitig angezogen werden können und dadurch eine einwandfreie Abdichtung an jedem Rand der Spannmuffe gewährleisten. Die auf die einzelnen Spannschrauben wirkenden Reibungskräfte sind dann auch nicht so groß, daß sie das einwandfreie Spannen ernsthaft behindern. Andererseits verursacht das Anbringen von zwei Spannschrauben statt einer nicht nur zusätzliche Kosten bei der Herstellung, sondern auch einen erhöhten Arbeitsaufwand beim Anbringen einer solchen Spannmuffe. Außerdem erfordert es ein größeres handwerkliches Können, zwei parallele Schrauben gleichmäßig wechselweise anzuziehen als nur eine zentrale Schraube festzuziehen.

Demgemäß liegt der Erfindung die Aufgabe zugrunde, eine Spannmuffe der eingangs genannten Art so auszubilden, daß trotz Anwendung nur einer Spannschraube keine Reibungskräfte auftreten, die das Anziehen dieser Schraube behindern und insbesondere die gewünschte gleichmäßige Abdichtung an beiden Rändern der Spannmuffe beeinträchtigen.

Diese Aufgabe wird nach der Erfindung dadurch gelöst, daß die Zwischenstücke jeweils mit einer Zylinderfläche, die um eine zur Spannmuffe im wesentlichen radial gerichtete Achse aufweist, an der Außenseite der benachbarten Spannplatte anliegen, womit die Zwischenstücke um die Achse schwenkbar sind.

Bei der erfindungsgemäßen Spannmuffe sollen also nicht unzulässige Reibungskräfte dadurch von der Spannschraube ferngehalten werden, daß die Spannplatten zwangsweise parallel zueinander gehalten werden, was sich in der wünschenswerten Weise überhaupt nicht verwirklichen läßt, sondern es wird vielmehr dafür Sorge getragen, daß bei einer Schrägstellung der Spannplatten keine Biegekräfte auf die Schraube übertragen werden können, welche zu unzulässigen Reibungskräften zwischen der Spannschraube und den die Spannschraube aufnehmenden Bohrungen führt, weil die Zwischenstücke eine gelenkige Verbindung zwischen der Schraube und den Spannplatten bilden, die es gestattet, daß die Spannschraube gegenüber den Spannplatten eine Schrägstellung einnimmt, ohne daß es zu einem Verkanten zwischen der Spannschraube und ihren Lagerbohrungen kommt und ohne daß die übertragung der Spannkräfte von der Spannschraube auf die Spannplatten und damit auf den Spannring beeinträchtigt wird. Damit sind umgekehrt die Spannplatten frei, sich insbesondere in bezug auf die Achse der Spannplatte schräg zu stellen, wie es erforderlich ist, um an den beiden, mit nach innen vorspringenden Wülsten versehenen Rändern des Dichtungsringes eine einwandfreie Abdichtung zu erzielen. Dabei werden zwangsläufig an beiden Rändern des Dichtungsringes im wesentlichen gleiche Spannkräfte ausgeübt, weil der Spannring frei ist, sich selbsttätig auf die Gleichgewichtslage einzustellen, bei der die an seinem Rande wirkenden Spannkräfte gleich sind. Damit wird durch die Erfindung eine Spannmuffe geschaffen, die wegen des Vorhandenseins nur einer Spannschraube sehr billig in der Herstellung sowie auch in der Handhabung ist und die zugleich eine optimale Abdichtung miteinander zu verbindender Rohre gewährleistet, gerade auch dann, wenn diese Rohre unterschiedliche Durchmesser haben, wie sie infolge der erheblichen Toleranzbereiche insbesondere bei miteinander zu verbindenden Zementrohren häufig auftreten. Die Verwendung von Zwischenstücken mit einer Zylinderfläche zur schwenkbaren Lagerung der Spannschraube ergibt nicht nur eine sehr einfache, sondern zugleich auch eine besonders widerstandsfähige Anordnung. Dabei können die Zwischenstücke einfach mit einer Durchgangsbohrung versehen und einerseits zwischen dem Schraubenkopf und der Spannplatte und andererseits zwischen einer auf der Schraube angeordneten Mutter und der Spannplatte angeordnet sein. Es ist aber auch möglich, das am Ende der Spannschraube angeordnete Zwischenstück unmittelbar als Mutter für die Spannschraube auszubilden.

Abgesehen davon, daß das Zwischenstück eine der benachbarten Spannplatte zugewandte Zylinderfläche aufweisen, also an der der Spannplatte zugewandten Seite ballig ausgebildet sein muß, ist die Form des Zwischenstückes beliebig und kann daher im Hinblick auf eine besonders zweckmäßige Fertigung gewählt werden. So kann das Zwischenstück einen zylindrischen Querschnitt haben, weil dann zur Herstellung der Zwischenstücke ein Stangenmaterial verwendet werden kann, an dem nicht erst eine Zylinderfläche angebracht werden muß. Eine solche Zylinderform bietet aber auch die Möglichkeit, das Zwischenstück als rohrförmiges Biegeteil auszubilden, in dessen Wandung einander radial gegenüberstehende Durchgangs- bzw. Gewindelöcher angeordnet sind. Solche Löcher können dann in einem ebenen Materialstreifen angebracht bzw. vorbereitet werden, noch bevor dann der Materialstreifen, möglichst vollautomatisch, zu einem rohrförmigen Zwischenstück gebogen wird.

Bei einer bevorzugten Ausführungsform der Erfindung haben die Zwischenstücke einen halbzylindrischen Querschnitt, so daß sie sich besonders einfach und mit einem minimalen Materialaufwand aus einem ebenen Materialstreifen herstellen lassen und dazu noch den besonderen Vorteil aufweisen, daß sie dem Kopf der Spannschraube und ggf. einer auf dem anderen Ende der Spannschraube sitzenden Schraubenmutter eine ebene Anschlagfläche bieten. Dabei kann die Spannschraube insbesondere mit einer Schraubenmutter zusammenwirken, die mit einem geradlinigen Randabschnitt an einem an der ebenen Anschlagfläche des Zwischenstückes angebrachten Vorsprung anliegt. Dafür ist es besonders vorteilhaft, wenn die Schraubenmutter einen quadratischen Grundriß hat.

Wie oben erläutert, hat die Anordnung der schwenkbaren Zwischenstücke den Zweck, eine Schrägstellung der Spannschraube gegenüber den Spannplatten zuzulassen. Infolgedessen müssen die in den Spannplatten angeordneten Durchgangslöcher für die Spannschraube einen erheblich größeren Durchmesser haben als die Spannschraube selbst oder können vorteilhaft als sich parallel zum Spannring erstreckende Langlöcher ausgebildet sein, so daß die Spannschraube in den Spannplatten in Axialrichtung der Spannmuffe keine nennenswerte Führung hat. Um hierdurch bedingte Schwierigkeiten zu vermeiden, sieht eine bevorzugte Ausführungsform der Erfindung vor, daß die Zwischenstücke zwischen an den Spannplatten angebrachten, seitlichen Anschlägen gehalten sind. Hierdurch wird eine Lagefixierung der Zwischenstücke mit der Spannschraube in bezug auf das Zentrum der Spannplatten gewährleistet, welche sowohl für die Handhabung als auch die Funktionssicherheit der erfindungsgemäßen Spannmuffe von Vorteil ist. Diese Anschläge können in besonders einfacher Weise dadurch gebildet werden, daß an den äußeren Rändern der Spannplatten Lappen angeordnet und U-förmig abgewinkelt sind, so daß sich von diesen Lappen gebildete Schenkel als Anschläge neben den Zwischenstücken erstrecken.

Zusätzlich können die Zwischenstücke auch radial zur Spannmuffe zwischen dem Spannring und einem am äußeren Rand der benachbarten Spannplatte angeordneten Anschlag gehalten sein. Ähnlich wie die seitlichen Anschläge kann auch der obere Anschlag von einem Lappen gebildet sein, der von dem äußeren Rand der Spannplatte absteht und das benachbarte Zwischenstück übergreift.

Für die Ausbildung der Spannplatten mit den Anschlägen für die Zwischenstücke ist es besonders vorteilhaft, wenn die Spannplatten von den abgewinkelten Enden von auf den Spannring aufgesetzten, steifen Blechteilen gebildet werden. Solche Blechteile lassen sich dann in einfacher Weise als Stanz-Biege-Teile aus einem Material herstellen, dessen Steifigkeit ausreichend groß ist, um den gestellten Festigkeits-Anforderungen zu genügen. Die oben behandelten, abgewinkelten Lappen verleihen dabei einem solchen Biegeteil auch dann eine erhebliche Steifigkeit, wenn es noch aus einem relativ dünnen Material hergestellt wird. Die Blechteile sind jedoch aus einem erheblich stärkeren Material hergestellt als der Spannring, der ausreichend flexibel sein muß, um sich an den Umfang des elastischen Dichtungsringes satt anzulegen.

Ein solches Blechteil kann dann in weiterer Ausgestaltung der Erfindung in seinem am Spannring anliegenden Abschnitt einen bis an die Spannplatte heranreichenden Ausschnitt aufweisen, in welchen das benachbarte Ende des Zwischenstückes eingreift. Hierdurch wird eine zusätzliche Führung des Zwischenstückes an seinem dem Spannring benachbarten Ende erreicht und noch der besondere Vorteil erzielt, daß von dießem Ende des Zwischenstückes die Spannkräfte unmittelbar auf den am Spannring anliegenden Rand der Spannplatte übertragen werden, wo sie unmittelbar in Spannrichtung wirken, ohne daß irgendwelche Kippmomente auftreten. Hierdurch wird die Wirkungsweise der erfindungsgemäßen Spannmuffe weiter verbessert.

Die Verbindung zwischen den Blechteilen und dem Spannring kann durch übliche Mittel erfolgen, insbesondere durch Nieten oder Schweißen. Als besonders vorteilhaft hat sich eine Befestigung der Blechteile am Spannring mittels sogenannter Druckfüge-Verbindungen erwiesen, die insbesondere eine sehr hohe Scherfestigkeit aufweisen und mit einfachen Werkzeugen herstellbar sind. Insbesondere treten bei der Herstellung einer Druckfüge-Verbindung keine Strukturveränderungen der Werkstoffe auf, die das Langzeitverhalten der Verbindung beeinträchtigen können, wie es bei Schweißverbindungen zu befürchten ist. Die Druckfüge-Technik ist beispielsweise in den Prospekten 383/D und 384/D der Firma Walter Eckold GmbH & Co. KG. in 3424 St. Andreasberg, beschrieben.

Die Anbringung von Blechteilen am Spannring hat den weiteren Vorteil, daß sie die Möglichkeit bietet, eines der Blechteile im Abstand vom Ende des Spannringes anzuordnen, so daß ein über das Blechteil überstehender Abschnitt des Spannringes eine das andere Ende des Spannringes überlappende Brücke bilden kann. Das bei solchen Spannmuffen übliche Anbringen einer besonderen Brücke wird durch diese Maßnahme vermieden. Außerdem ist es für das Spannverhalten günstiger, wenn der Spannring selbst von einem ununterbrochenen Materialstreifen gebildet wird, der auch auf seiner ganzen Länge nach innen abgewinkelte Ränder aufweisen kann, so daß der Dichtungsring zwischen diesen Rändern sicher gehalten ist und die aus Dichtungsring und Spannring bestehende Spannmuffe stets als Baueinheit gehandhabt werden kann.

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen

Fig. 1 die Seitenansicht,
Fig. 2 die Vorderansicht und
Fig. 3 die Draufsicht auf eine erste Ausführungsform einer Spannmuffe nach der Erfindung,
Fig. 4 einen Querschnitt durch ein bei der Spannmuffe nach den Fig. 1 bis 3 verwendetes Zwischenstück in vergrößertem Maßstab,
Fig. 5 die Seitenansicht und
Fig. 6 die Vorderansicht einer zweiten Ausführungsform einer solchen Spannmuffe,
Fig. 7 einen Schnitt längs der Linie VII - VII durch die Spannmuffe nach Fig. 5 und
Fig. 8 einen Querschnitt ähnlich Fig. 4 durch das bei der Spannmuffe nach den Fig. 5 bis 7 verwendete Zwischenstück.

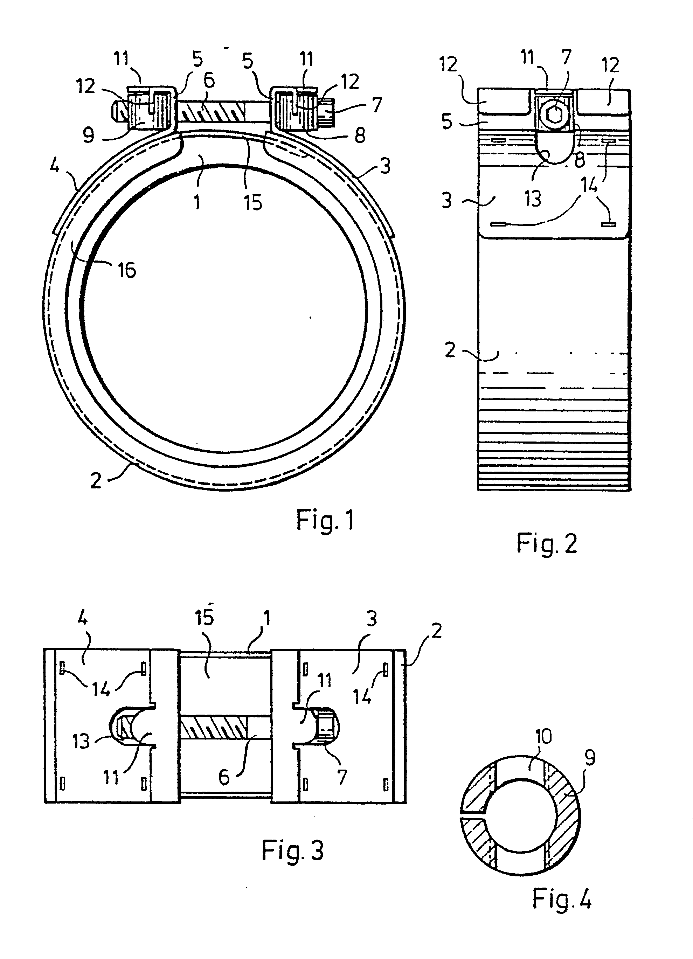

Die in der Zeichnung dargestellte Spannmuffe besteht aus einem gummielastischen Dichtungsring 1 und einem den Dichtungsring umgebenden Spannring 2 in Form eines kreisförmig gebogenen Blechstreifens, an dessen Außenseite zwei Blechteile 3, 4 befestigt sind, deren einander zugewandte Enden abgewinkelt sind und einander mit Abstand gegenüberstehende, zueinander parallele Spannplatten 5 bilden. Diese Spannplatten werden von einer zentralen Spannschraube 6 durchsetzt, die sich mit ihrem Kopf 7 über ein Zwischenstück 8 und mit ihrem anderen Ende über ein als Mutter ausgebildetes Zwischenstück 9 an der jeweiligen Außenseite der Spannplatte 5 abstützen. Die Zwischenstücke 8, 9 haben, wie insbesondere aus Fig. 4 ersichtlich, einen zyindrischen Querschnitt und sind bei dem dargestellten Ausführungsbeispiel als rohrförmige Biegeteile ausgebildet. Bei dem in Fig. 4 dargestellten Zwischenstück 9 befinden sich in den Wandungen Gewindebohrungen 10, die dem Gewinde der Spannschraube 6 entsprechen, während sich in dem Zwischenstück 8, an dem die Spannschraube 6 mit ihrem Kopf 7 anliegt, entsprechende Durchgangsbohrungen für die Spannschraube 6 befinden. Bei der Ausbildung der Zwischenstücke 8, 9 als rohrförmige Biegeteile können die zur Herstellung der Gewinde- und Durchgangsbohrungen dienenden Löcher in einen ebenen Materialstreifen eingestanzt werden, wonach der Materialstreifen zu der in Fig. 4 dargestellten Zylinderform gebogen wird. Hierdurch läßt sich die Herstellung der Zwischenstücke bedeutend vereinfachen und verbilligen.

Die Enden der auf dem Spannring aufgesetzten, steifen Blechteile 3, 4 sind im Anschluß an die die Spannplatten 5 bildenden Abschnitte nochmals abgewinkelt, und zwar im Bereich der Mitte einfach und daran anschließend zweifach, so daß von den Spannplatten 5 im Bereich von deren Mitte Lappen 11 abstehen, welche die Enden der Zwischenstücke 8, 9 übergreifen und auf diese Weise Anschläge für die Zwischenstücke bilden. Die neben den Lappen 11 gelegenen Abschnitte sind U-förmig abgewinkelt, derart, daß die Schenkel 12 dieser Abschnitte seitlich neben den Zwischenstücken 8, 9 angeordnet sind und seitliche Anschläge für diese Zwischenstücke bilden. Weiterhin ist in dem am Spannring anliegenden Abschnitt der Blechteile 3, 4 jeweils ein Ausschnitt 13 angeordnet, dessen lichte Weite dem Durchmesser der Zwischenstücke 8, 9 gleich ist und der sich bis zu der jeweiligen Spannplatte erstreckt. Die Zwischenstücke 8, 9 greifen in diese Ausschnitte 13 ein und erhalten dadurch eine zusätzliche seitliche Führung. Außerdem gewährleisten diese Ausschnitte, daß die Zwischenstücke bis an die Oberfläche des Spannringes 2 heranreichen und die Spannkräfte bis in den Bereich der Biegestelle hinein auf die Spannplatten 5 übertragen, so daß ein Abbiegen der Spannplatten 5 bewirkende Kräfte weitgehend vermieden sind.

Die Blechteile 3, 4 bestehen aus einem ausreichend steifen Material, um die von der Spannschraube 6 auf die Spannplatten 5 ausgeübten Kräfte einwandfrei auf den Spannring 2 übertragen zu können. Zur Verbindung der Blechteile 3, 4 mit dem Spannring 2 dienen bei dem dargestellten Ausführungsbeispiel sogenannte Druckfüge-Verbindungen 14, bei denen aus dem Blechteil ausgestanzte Materialabschnitte durch entsprechende, gleichzeitig ausgestanzte Öffnungen des Spannringes hindurchgreifen und auf der Rückseite des Spannringes verstaucht sind. Diese Art der Verbindung bietet den Vorteil, daß sie einfach herstellbar ist, insbesondere eine hohe Scherfestigkeit aufweist und keine Materialveränderungen verursacht, welche die Dauerbelastbarkeit der Materialien beeinträchtigen könnte.

Von den beiden Blechteilen 3 und 4 ist das eine Blechteil 3 unmittelbar am Ende des Spannringes 2 angebracht, während über das andere Blechteil 4 ein Abschnitt 15 des Spannringes übersteht, der bie unter das andere Ende des Spannringes 2 reicht und somit eine Brücke bildet, welche den Spannring zu einem vollständigen Kreis schließt. Im Bereich zwischen den beiden Spannplatten 5 sind die Ränder 16 des Spannringes 2 nach innen abgewinkelt und bilden die Stirnflächen des Dichtungsringes 1 übergreifende Stege.

Die beschriebene Spannmuffe ist zur Verbindung von Rohren bestimmt, insbesondere von Gußeisen- und Asbestzement-Rohren. Diese Rohre können bei gleicher Nennweite erhebliche Durchmesser-Unterschiede aufweisen, die noch im zulässigen Toleranzbereich liegen. Die erfindungsgemäße Spannmuffe gewährleistet den Ausgleich aller zulässigen Toleranzen. Nach dem Aufsetzen der Spannmuffe auf die Rohrenden bzw. das Einfügen der Rohrenden in die Spannmuffe, bei der Dichtungsring und Spannring infolge des radial nach innen abgewinkelten Randes 16 des Spannringes eine Einheit bilden, genügt es, die Spannschraube 6 anzuziehen, um eine in jeder Hinsicht einwandfreie Abdichtung zu gewährleisten. Durch die zentrale Spannschraube 6 wird zunächst der Durchmesser der Spannmuffe so weit vermindert, bis der Dichtungsring an dem Rohr mit dem größeren Durchmesser zur Anlage kommt. Der Dichtungsring weist in nicht näher dargestellter Weise an seinen Rändern eine nach innen vorspringende Wulst auf, so daß die Anlage des Dichtungsringes jeweils an seinem äußeren Rand erfolgt. Beim weiteren Anziehen der Spannschraube 6 wird der Durchmesser der Spannmuffe im Bereich der Mitte weiter verengt, wogegen der Durchmesser der Spannmuffe an demjenigen Rand, an dem die Wulst des Dichtungsringes an dem Rohr mit dem größeren Durchmesser Anlage gefunden hat, erhalten bleibt. Dadurch entsteht eine konische Verformung der Spannmuffe, die ihr Ende findet, wenn der Dichtungsring mit der am anderen Rand angebrachten Wulst an dem Rohr mit dem kleineren Durchmesser zur Anlage kommt. Danach findet eine gleichmäßige Erhöhung des Spanndruckes an den beiden Rändern des Dichtungsringes statt, wodurch eine einwandfreie Abdichtung beider Rohre gewährleistet ist.

Für diesen Vorgang ist wichtig, daß die konische Verformung der Spannmuffe, bei der die Spannplatten 5 in bezug auf die Achsrichtung der Spannmuffe eine Schrägstellung zueinander einnehmen, nicht behindert wird. Damit verbunden ist auch eine Schrägstellung der Spannplatten 5 gegenüber der Spannschraube 6, die ungehindert erfolgen kann, weil sich die Spannschraube 6 an den Spannplatten 5 über die Zwischenstücke 8, 9 abstützt, die ihrerseits an den Spannplatten 5 mit je einer Zylinderfläche anliegen, die eine zur Spannmuffe radial gerichtete Schwenkachse bildet. Infolgedessen sind die Spannplatten 5 gegenüber der Spannschraube 6 und damit auch gegeneinander frei schwenkbar, so daß sie völlig ungehindert die Schrägstellung einnehmen können, bei der die auf die Ränder des Dichtungsringes ausgeübten Spannkräfte im wesentlichen gleich sind. Damit wird eine in jeder Hinsicht einwandfreie Verbindung der Rohre hergestellt.

Von besonderem Vorteil ist, daß infolge der Verwendung von nur einer Spannschraube sowohl die Ausbildung der Spannmuffe als auch ihre Handhabung besonders einfach ist. Insbesondere ist es nicht erforderlich, zwei parallele Spannschrauben abwechselnd gleichmäßig anzuziehen, was einen erhöhten Arbeitsaufwand und auch noch wesentlich mehr Geschick erfordert als das Anziehen einer einzigen, zentralen Spannschraube. Dabei sorgt die Führung der Zwischenstücke an den Spannplatten 5 für einen stets einwandfreien, zentralen Angriff der Spannkräfte.

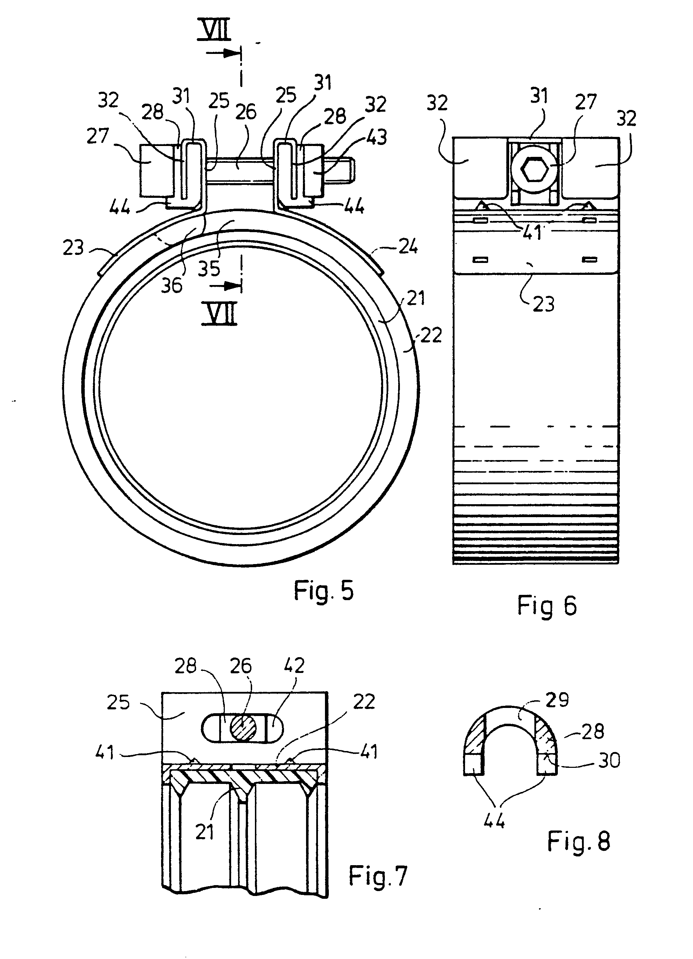

Eine weitere, in den Fig. 5 bis 7 dargestellte Ausführungsform der Erfindung besteht wiederum aus einem gummielastischen Dichtungsring 21 und einem den Dichtungsring umgebenden Spannring 22, an dessen Außenseite zwei Blechteile 23, 24 befestigt sind, die wiederum Spannplatten 25 bildende, abgewinkelte Enden aufweisen. Die Biegestelle zwischen den Spannplatten 25 und den an der Außenseite des Spannringes 2 befestigten Abschnitten der Blechteile 23, 24 ist durch Sicken 41 versteift.

Die Spannplatten 25 sind mit zur Achse der Spannmuffe parallelen Langlöchern 42 versehen, durch die sich die im übrigen zentral angeordnete Spannschraube 26 hindurch erstreckt. Die Zwischenstücke 28 werden in diesem Falle von halbzylindrischen Biegeteilen gebildet, die beide eine Durchgangsbohrung 29 für die Spannschraube 26 besitzen. Sie weisen jeweils eine ebene Anlagefläche 30 für den Kopf 27 der Spannschraube 26 bzw. eine Mutter 43 auf, bei der es sich um eine Vierkantmutter handelt, die mit ihrem unteren Rand an Vorsprüngen 44 anliegt, die an den unteren Rändern der von dem Zwischenstück 28 gebildeten Anlagefläche 30 angeordnet sind. Der Vorteil der Verwendung halbzylindrischer Zwischenstücke besteht im wesentlichen darin, daß sie besonders einfach mit minimalem Materialbedarf herstellbar sind und die Verwendung einer billigen Mutter gestatten, die durch die Anlage an den Vorsprüngen 44 gegen Verdrehen gesichert ist und daher bei der Montage der Spannmuffe nicht besonders gehalten zu werden braucht.

Die Zwischenstücke 28 sind wiederum zwischen abgewinkelten Randabschnitten 31, 32 der Blechteile 23, 24 gehalten, so daß sie trotz der eine Schrägstellung der Spannschraube 26 zulassenden Langlöcher 42 in den Spannplatten 25 in der Mitte der Spannplatten fixiert sind.

Der Spannring 22 der Ausführungsform nach den Fig. 5 bis 8 weist noch die Besonderheit auf, daß er auf seiner ganzen Länge einen nach innen abgewinkelten Rand aufweist. An dem über das eine Blechteil 24 überstehenden Abschnitt 35 des Spannringes ist der Abstand zwischen den abgewinkelten Rändern so weit vermindert, daß dieser Abschnitt zwischen die abgewinkelten Ränder am anderen Ende 36 des Spannringes paßt. Auf diese Weise ist gewährleistet, daß der Dichtungsring 21 auf seinem gesamten Umfang zwischen abgewinkelten Rändern gefangen ist und daher seitlich nicht ausweichen kann.

Es versteht sich, daß die Erfindung nicht auf die dargestellten Ausführungsbeispiele beschränkt ist, sondern Abweichungen davon möglich sind, ohne den Rahmen der Erfindung zu verlassen. So besteht keine Notwendigkeit, daß der Spannring radial nach innen abgewinkelte Ränder aufweist, auch wenn die Anwendung solcher Ränder erhebliche Vorteile bietet. Weiterhin brauchen die Zwischenstücke nicht rohr- oder schalenförmig ausgebildet zu sein, sondern können aus vollem Material unterschiedlicher Art, einschließlich Kunststoff, bestehen. Auch wäre es beispielsweise möglich, eine Zapfenlagerung für die Zwischenstücke vorzusehen. Endlich bestehen auch für die Lagefixierung der Spannstücke viele Möglichkeiten. Wichtig ist lediglich, daß die Zwischenstücke an den Spannplatten schwenkbar abgestützt sind und dadurch die Spannschraube führen, so daß keine Notwendigkeit besteht, eine die Verschwenkbarkeit störende Führung der Spannschraube an den Spannplatten vorzusehen.

**Patentansprüche**

1. Spannmuffe für Rohre, bestehend aus einem gummielastischen Dichtungsring (1; 21), der an jedem seiner Enden mindestens eine radial nach innen vorspringende Wulst aufweist, und einen den Dichtungsring umgebenden Spannring (2; 22) in Form eines kreisförmig gebogenen Blechstreifens, an dessen Enden radial nach außen gerichtete, einander gegenüberstehende Spannplatten (5; 25) angebracht sind, die von einer zentral angeordneten Spannschraube (6; 26) durchsetzt werden, die sich ihrerseits an den Spannplatten (5; 25) über Zwischenstücke (8, 9; 28) abstützt, dadurch gekennzeichnet, daß die Zwischenstücke (8, 9; 28) jeweils mit einer Zylinderfläche, die eine zur Spannmuffe im wesentlichen radial gerichtete Achse aufweist, an der Außenseite der benachbarten Spannplatten (5; 25) anliegen, womit die Zwischenstücke um die Achse schwenkbar sind.

2. Spannmuffe nach Anspruch 1, dadurch gekennzeichnet, daß das am Ende der Spannschraube (6) angeordnete Zwischenstück (9) unmittelbar als Mutter für die Spannschraube (6) ausgebildet ist.

3. Spannmuffe nach Anspruch 1 oder 2, dadurch gekennzeichnet, daß die Zwischenstücke (8, 9) einen zylindrischen Querschnitt haben.

4. Spannmuffe nach Anspruch 1 oder 2, dadurch gekennzeichnet, daß die Zwischenstücke (28) einen halbzylindrischen Querschnitt haben und eine ebene Anschlagfläche (30) für den Kopf (27) der Spannschraube (26) und ggf. eine auf dem anderen Ende der Spannschraube sitzende Schraubenmutter (43) aufweisen.

5. Spannmuffe nach Anspruch 3 oder 4, dadurch gekennzeichnet, daß die Zwischenstücke (8, 9; 28) aus Biegeteilen bestehen, in deren Wandungen ggf. einander radial gegenüberstehende Durchgangs- bzw. Gewindelöcher (10; 29) angeordnet sind.

6. Spannmuffe nach Anspruch 4, dadurch gekennzeichnet, daß die Spannschraube (26) mit einer Schraubenmutter (43) zusammenwirkt, die mit einem geradlinigen Randabschnitt an einem an der ebenen Anschlagfläche (30) des Zwischenstückes (28) angebrachten Vorsprung (44) anliegt.

7. Spannmuffe nach Anspruch 6, dadurch gekennzeichnet, daß die Schraubenmutter (43) einen quadratischen Grundriß hat.

8. Spannmuffe nach einem der vorhergehenden Ansprüche, dadurch gekennzeichnet, daß die Zwischenstücke (8, 9; 28) zwischen an den Spannplatten (5; 25) angebrachten seitlichen Anschlägen gehalten sind.

9. Spannmuffe nach Anspruch 8, dadurch gekennzeichnet, daß an den äußeren Rändern der Spannplatten (5; 25) Lappen angeordnet und U-förmig abgewinkelt sind, deren neben den Zwischenstücken (8, 9; 28) angeordnete Schenkel (12; 32) die seitlichen Anschläge bilden.

10. Spannmuffe nach einem der vorhergehenden Ansprüche, dadurch gekennzeichnet, daß die Zwischenstücke (8, 9; 28) radial zur Spannmuffe zwischen dem Spannring (2; 22) und einem am äußeren Rand der benachbarten Spannplatte (5; 25) angeordnete Anschlag (11; 31) gehalten sind.

11. Spannmuffe nach Anspruch 10, dadurch gekennzeichnet, daß von den äußeren Rändern der Spannplatten (5; 25) je ein das Ende des benachbarten Zwischenstückes (8, 9: 28) als Anschlag übergreifender Lappen (11; 31) absteht.

12. Spannmuffe nach einem der vorhergehenden Ansprüche, dadurch gekennzeichnet, daß die in den Spannplatten (25) angeordneten Durchgangslöcher für die Spannschraube (26) als sich parallel zum Spannring (22) erstreckende Langlöcher (42) ausgebildeten sind.

13. Spannmuffe nach einem der vorhergehenden Ansprüche, dadurch gekennzeichnet, daß die Spannplatten (5; 25) von den abgewinkelten Enden von auf den Spannring (2; 22) aufgesetzten, steifen Blechteilen (3, 4; 23, 24) gebildet werden.

14. Spannmuffe nach Anspruch 13, dadurch gekennzeichnet, daß im Bereich des Winkels zwischen den Spannplatten (25) und den am Spannband (22) befestigten Abschnitten der Blechteile (23, 24) versteifende Sicken (41) angeordnet sind.

15. Spannmuffe nach Anspruch 13 oder 14, dadurch gekennzeichnet, daß die Blechteile (3, 4) in ihrem am Spannring (2) anliegenden Abschnitt einen bis an die jeweilige Spannplatte (5) heranreichenden Ausschnitt (13) aufweisen, in welchen das benachbarte Ende des Zwischenstückes (8, 9) eingreift.

16. Spannmuffe nach einem der Ansprüche 13 bis 15, dadurch gekennzeichnet, daß die Blechteile (3, 4) am Spannring (2) mittels Druckfüge-Verbindungen (14) befestigt sind.

17. Spannmuffe nach einem der Ansprüche 13 bis 16, dadurch gekennzeichnet, daß eines der Blechteile (4; 24) im Abstand vom Ende des Spannringes (2; 22) angeordnet ist und der über das Blechteil (4; 24) überstehende Abschnitt (15; 35) des Spannringes eines das andere Ende des Spannringes überlappenden Brücke bildet.

## Claims

1. Clamping socket for pipes, consisting of a rubber-elastic packing ring (1; 21) having at each of its ends at least one radially inwardly projecting bead, and enclosing the packing ring a clamping ring (2; 22) in the form of a circularly bent strip of sheet metal at the ends of which there are radially outwardly directed and mutually opposite clamping plates (5; 25) through which passes a centrally disposed clamping screw (6; 26) which is in turn braced on the clamping plates (5; 25) through intermediate pieces (8, 9; 28), characterised in that the intermediate pieces (8, 9; 28) each have a cylindrical face with an axis directed substantially radially of the clamping socket and by which they bear on the outside of the adjacent clamping plates (5; 25) so that the intermediate pieces are pivotable about the axis.

2. Clamping socket according to Claim 1, characterised in that the intermediate piece (9) disposed at the end of the clamping screw (6) is directly constructed as a nut for the clamping screw (6).

3. Clamping socket according to Claim 1 or 2, characterised in that the intermediate pieces (8, 9) have a cylindrical cross-section.

4. Clamping socket according to Claim 1 or 2, characterised in that the intermediate pieces (28) have a semi-cylindrical cross-section and comprise a flat bearing surface (30) for the head (27) of the clamping screw (26) and possibly a screw-threaded nut (43) mounted on the other end of the clamping screw.

5. Clamping socket according to Claim 3 or 4, characterised in that the intermediate pieces (8, 9; 28) consist of flexing parts in the walls of which there are possibly radially oppositely disposed screw-threaded or through bores (10; 29).

6. Clamping socket according to Claim 4, characterised in that the clamping screw (26) cooperates with a screw-threaded nut (43) having a rectilinear marginal portion which bears on a projection (44) provided on the plane abutment face (30) of the intermediate piece (28).

7. Clamping socket according to Claim 6, characterised in that the screw-threaded nut (43) is square when viewed in plan.

8. Clamping socket according to one of the preceding Claims characterised in that the intermediate pieces (8, 9; 28) are supported between lateral abutments provided on the clamping plates (5; 25).

9. Clamping socket according to Claim 8, characterised in that at the outer edges of the clamping plates (5; 25) there are lugs which are angled over in a U-shape, of which the legs (12; 32) disposed between the intermediate pieces (8, 9; 28) constitute the lateral abutments.

10. Clamping socket according to one of the preceding Claims, characterised in that the intermediate pieces (8, 9 28) are supported radially in relation to the clamping socket, between the clamping socket ring (2; 22) and an abutment (11; 31) disposed at the outer edge of the adjacent clamping plate (5; 25).

11. Clamping socket according to Claim 10, characterised in that a lug (11; 31) projects from each of the outer edges of the clamping plates (5; 25) to serve as an abutment, engaging over the end of the adjacent intermediate piece (8, 9; 28).

12. Clamping socket according to one of the preceding Claims characterised in that the through bores disposed in the clamping plates (25) to accommodate the clamping screw (26) are constructed as elongated holes (42) extending parallel with the clamping ring (22).

13. Clamping socket according to one of the preceding Claims, characterised in that the clamping plates (5; 25) are constituted by the angled-over ends of rigid sheet metal parts (3, 4; 23, 24) fitted on the clamping ring (2; 22).

14. Clamping socket according to Claim 13, characterised in that reinforcing beads (41) are disposed in the region of the angle between the clamping plates (25) and the portions of the sheet metal parts (23, 24) which are fixed on the clamping strip (22).

15. Clamping socket according to claim 13 or 14, characterised in that the portion of the sheet metal parts (3, 4) which bears on the clamping ring (2) comprises a cut-out (13) extending as far as the respective clamping plate (5) to accomodate engagement of the adjacent end of the intermediate piece (8, 9).

16. Clamping socket according to one of Claims 13 to 15, characterised in that the sheet metal parts (3, 4) are fixed on the clamping ring (2) by means of press fasteners (14).

17. Clamping socket according to one of Claims 13 to 16, characterised in that one of the sheet metal parts (4; 24) is disposed at a distance from the end of the clamping ring (2; 22), the portion (15; 35) of the clamping ring which projects beyond the sheet metal part (4; 24) forming a bridge to overlap the other end of the clamping ring.

## Revendications

1. Manchon de serrage pour tuyaux comprenant un anneau d'étanchéité (1; 21) élastique, caoutchouteux, qui présente à chacune de ses extrémités au moins un bourrelet faisant saillie radialement vers l'intérieur, et un collier de serrage (2; 22) entourant l'anneau d'étanchéité sous la forme d'une bande métallique recourbée sous forme circulaire, aux extrémités de laquelle sont agencées des plaques de serrage (5; 25) dirigées radialement vers l'extérieur, disposées l'une en face de l'autre et traversées par une vis de serrage (6; 26) agencée centralement qui s'appuie, pour sa part, sur les plaques de serrage (5; 25) par l'intermédiaires de pièces intercalaires (8, 9; 28), caractérisé en ce que les pièces intercalaires (8, 9; 28) sont chacune en appui sur la face externe des plaques de serrage voisines (5; 25) par une surface cylindrique, qui présente un axe dirigé sensiblement radialement par rapport au manchon de serrage, les pièces intercalaires étant capables de pivoter autour de l'axe.

2. Manchon de serrage suivant la revendication 1, caractérisé en ce que la pièce intercalaire (9) agencée à l'extrémité de la vis de serrage (6) est réalisée directement sous la forme d'un écrou pour la vis de serrage (6).

3. Manchon de serrage suivant l'une des revendications 1 et 2, caractérisé en ce que les pièces intercalaires (8, 9) présentent une section transversale cylindrique.

4. Manchon de serrage suivant l'une des revendications 1 et 2, caractérisé en ce que les pièces intercalaires (28) ont une section transversale semi-cylindrique et présentent une surface de butée plane (30) pour la tête (27) de la vis de serrage (26) et éventuellement un écrou (43) disposé à l'autre extrémité de la vis de serrage.

5. Manchon de serrage suivant l'une des revendications 3 et 4, caractérisé en ce que les pièces intercalaires (8, 9; 28) sont constituées de pièces recourbées, dans les parois desquelles des trous de passage ou taraudés (10; 29) disposés l'un en face de l'autre radialement sont éventuellement agencés.

6. Manchon de serrage suivant la revendication 4, caractérisé en ce que la vis de serrage (26) coopère avec un écrou (43) qui, par une section de bord rectiligne, est en appui sur une saillie (44) agencée sur la surface de butée plane (30) de la pièce intercalaire (28).

7. Manchon de serrage suivant la revendication 6, caractérisé en ce que l'écrou (43) présente une projection carrée.

8. Manchon de serrage suivant l'une des revendications précédentes, caractérisé en ce que les pièces intercalaires (8, 9; 28) sont maintenues entre des butées latérales agencées sur les plaques de serrage (5; 25).

9. Manchon de serrage suivant la revendication 8, caractérisé en ce que sur les bords externes des plaques de serrage (5; 25) sont agencées et repliées en forme de U des languettes dont des ailes (12; 32) disposées à côté des pièces intercalaires (8, 9; 28) forment les butées latérales.

10. Manchon de serrage suivant une des revendications précédentes, caractérisé en ce que les pièces intercalaires (8, 9; 28) sont maintenues radialement par rapport au manchon de serrage entre le collier de serrage (2; 22) et une butée (11; 31) agencée sur le bord externe de la plaque de serrage (5; 25) voisine.

11. Manchon de serrage suivant la revendication 10, caractérisé en ce qu'une languette (11; 31) recouvrant à titre de butée l'extrémité de la pièce intercalaire voisine (8, 9; 28) fait saillie depuis les bords externes des plaques de serrage (5; 25).

12. Manchon de serrage suivant l'une des revendications précédentes, caractérisé en ce que les trous de passage disposés dans les plaques de serrage (25) pour la vis de serrage (26) sont réalisés sous la forme de trous allongés (42) qui s'étendent parallèlement au collier de serrage (22).

13. Manchon de serrage suivant l'une des revendications précédentes, caractérisé en ce que les plaques de serrage (5; 25) sont formées par les extrémités repliées de pièces de tôle (3, 4; 23, 24) rigides qui sont montées sur le collier de serrage (2; 22).

14. Manchon de serrage suivant la revendication 13, caractérisé en ce que des moulures de renforcement (41) sont disposées dans la zone de l'angle entre les plaques de serrage (25) et les sections, fixées sur la bande de serrage (22), des pièces de tôle (23, 24).

15. Manchon de serrage suivant l'une des revendications 13 et 14, caractérisé en ce que les pièces de tôle (3, 4) présentent, dans leur section adjacente au collier de serrage (2), une découpe (13) qui va jusqu'à la plaque de serrage correspondante (5) et dans laquelle pénètre l'extrémité voisine de la pièce intercalaire (8, 9).

16. Manchon de serrage suivant l'une des revendications 13 à 15, caractérisé en ce que les pièces de tôle (3, 4) sont fixées sur le collier de serrage (2) au moyen de liaisons à joint pressé (14).

17. Manchon de serrage suivant l'une des revendications 13 à 16, caractérisé en ce qu'une des pièces de tôle (4; 24) est agencée à distance de l'extrémité du collier de serrage (2; 22) et en ce que la section (15; 35) du collier de serrage qui fait saillie au-delà de la pièce de tôle (4; 24) forme un pont qui recouvre l'autre extrémité du collier de serrage.

Fig. 1

Fig. 2

Fig. 3

Fig. 4

Fig. 5

Fig 6

Fig.7

Fig. 8

3